# FASCICULE DE BREVET EUROPEEN

(11) **EP 3 478 498 B1**
(45) Date de publication et mention de la délivrance du brevet: **29.12.2021**
(21) Numéro de dépôt: 17736610.1
(22) Date de dépôt: 28.06.2017
(51) Int. Cl.: B32B 17/10

(54) **BUTEE POUR POCHE A PAROIS SOUPLES ET POCHE A PAROIS SOUPLES**
STÜTZELEMENT FÜR TASCHE MIT FLEXIBLEN WANDUNGEN UND TASCHE MIT FLEXIBLEN WANDUNGEN
ABUTMENT FOR POUCH WITH FLEXIBLE WALLS AND POUCH WITH FLEXIBLE WALLS

(30) Priorité: 30.06.2016 BE 201605512
(43) Date de publication de la demande: 08.05.2019
(73) Titulaire: Simtech S.P.R.L., 7503 Froyennes (BE)
(72) Inventeur: VANDROMME, Pascal, 59830 Cysoing (FR); ROSIER, Reza, 7711 Mouscron (BE)
(74) Mandataire: Cabinet Beau de Loménie
(86) Numéro de dépôt international: PCT/EP2017/066043
(87) Numéro de publication internationale: WO 2018/002164

(56) Documents cités:
- EP-A1- 0 562 142
- FR-A1- 2 776 284

## Description

La présente invention concerne une poche de traitement, utilisée notamment dans la fabrication de verre feuilleté. En particulier, la présente invention concerne une butée pour une telle poche de traitement, destinée à servir d'appui pour le verre feuilleté introduit dans la poche et à séparer le verre feuilleté du moyen de dépressurisation de la poche.

Il est connu d'utiliser des poches à parois souples pour fabriquer notamment du verre feuilleté. En particulier, de telles poches comprennent un volume intérieur délimité par deux feuilles assemblées ensemble de manière étanche, et un moyen de dépressurisation disposé dans la poche, par exemple dans une portion dédiée de la poche en communication fluidique avec le volume intérieur. Une fois les feuilles de verre séparées par une couche en matériau synthétique placées dans la poche, celle-ci est chauffée et dépressurisée, afin de feuilleter le verre.

Une telle poche est notamment décrite dans le document FR 2 776 284. Dans ce document, la poche comporte notamment un ressort de drainage, formant le moyen de dépressurisation, disposé dans le fond de la poche, dans une portion en communication fluidique avec le reste de la poche, et des taquets disposés contre le ressort ou la paroi de la portion dédiée, afin d'écarter le verre à feuilleter du ressort.

Cependant, une telle poche nécessite de nombreuses étapes de fabrication, notamment pour assembler le ressort métallique dans le reste de la poche comportant essentiellement des matériaux à base élastomérique. Par ailleurs, lors de l'assemblage des éléments élastomériques, par exemple par réticulation, il convient également de prendre soin à ne pas boucher les ouvertures de circulation d'air entre le volume intérieur de la poche et la portion dédiée comportant le ressort. Ainsi, classiquement, des pièces métalliques appelées « peignes » (car présentant une pluralité de tiges montées en saillies parallèles sur un corps longitudinal) sont positionnées, lors des étapes de réticulation, dans les ouvertures de circulation d'air afin d'empêcher que ces ouvertures ne soient obstruées.

Toutes ces étapes de fabrication, qui sont réalisées par des opérateurs, augmentent la durée de fabrication de la poche, ainsi que les coûts de fabrication et les risques d'erreur par l'opérateur.

### Objet et résumé de l'invention

La présente invention vise à résoudre les différents problèmes techniques énoncés précédemment. En particulier, la présente invention vise à fournir une poche à parois souples pouvant être fabriquée plus simplement et plus rapidement, afin d'améliorer la fiabilité de la poche et limiter les coûts de fabrication. La présente invention vise à proposer une butée intérieure permettant de faciliter la fabrication de la poche.

Ainsi, selon un aspect, il est proposé une butée pour poche à parois souples, la poche étant configurée pour être dépressurisée grâce à un moyen de dépressurisation longitudinale en communication fluidique avec un volume intérieur de la poche. La butée est destinée à former un appui pour le chant d'une pièce introduite dans le volume intérieur de la poche. La butée présente une forme longitudinale et comprenant au moins :
- une première surface longitudinale destinée à délimiter ou à être en contact avec au moins une partie du moyen de dépressurisation,
- une deuxième surface longitudinale, par exemple plane, distante de la première surface longitudinale et étant destinée à former une surface d'appui pour le chant de la pièce, notamment sensiblement plate, introduite dans la poche, et
- des canaux de circulation d'air entre la première surface longitudinale et la deuxième surface longitudinale.

Grâce à une telle butée, il devient plus facile d'intégrer un moyen de dépressurisation dans la poche : en effet, la butée, qui comporte des canaux de circulation d'air déjà formés, peut facilement être assemblée au reste de la poche sans nécessiter de « peigne » à positionner dans les canaux de circulation. Par ailleurs, la butée étant fabriquée dans un matériau élastomérique, son assemblage avec le reste de la poche est rendu particulièrement aisé.

Autrement dit, la butée présente une forme générale cylindrique, par exemple droite, dont la section, ou base, présente deux lignes distantes l'une de l'autre qui sont destinées d'une part à délimiter ou à être en contact avec au moins une partie du moyen de dépressurisation, et d'autre part à former une surface d'appui pour le chant de la pièce introduite dans la poche.

La butée selon la présente invention est un élément distinct de la poche, qui peut être considérée isolément, ou seule, sans la poche. La butée existe donc en tant que telle, et est indépendante de la poche avant d'y être intégrée lors de la fabrication de la poche.

La butée est fabriquée de manière indépendante de la poche, et avant la fabrication de la poche : dit autrement, la butée n'est pas fabriquée in situ, pendant la fabrication de la poche, mais est fabriquée avant. D'ailleurs, la butée est configurée pour (ou destinée à ou apte à) permettre la fabrication d'une poche à paroi souple. La butée est configurée pour (ou destinée à ou apte à) être assemblée dans une poche à parois souples.

L'invention concerne ainsi une butée pour la fabrication d'une poche à parois souples.

Préférentiellement, la deuxième surface est une surface non-métallique.

Préférentiellement, en section, la longueur des canaux de circulation d'air est supérieure ou égale à la moitié de la largeur de la butée, prise perpendiculairement à l'axe des canaux de circulation d'air.

Préférentiellement, les canaux de circulation d'air sont sensiblement perpendiculaires à la première surface longitudinale et/ou à la deuxième surface longitudinale. Les canaux de circulation d'air permettent de relier entre elles les deux surfaces longitudinales de la butée, en formant des conduits de circulation d'air entre elles.

Selon un premier mode de réalisation, la première surface longitudinale présente, en section, un contour fermé, par exemple un ovale ou un cercle, délimitant le moyen de dépressurisation ou en contact avec le moyen de dépressurisation.

Dans ce mode de réalisation, la butée comporte d'une part une surface d'appui du verre positionné dans la poche à parois souples, et également un canal de vide longitudinal en communication fluidique avec les canaux de circulation d'air. La butée peut ainsi former également un moyen de dépressurisation, notamment si une des extrémités du canal de vide longitudinal communique, à l'extérieur de la poche, avec un dispositif d'aspiration d'air. Alternativement, la butée peut accueillir un moyen de drainage tel un ressort à spires non-jointives dans le canal du vide longitudinal, afin de former le moyen de dépressurisation de la poche.

Ainsi, grâce à la butée qui comporte également le moyen de dépressurisation, il devient plus facile d'intégrer le moyen de dépressurisation dans la poche et donc de fabriquer la poche.

Préférentiellement, la butée comprend également une surface périphérique longitudinale s'étendant d'une première extrémité longitudinale de la deuxième surface longitudinale à une deuxième extrémité longitudinale de la deuxième surface longitudinale de manière à obtenir, en section, la deuxième surface longitudinale et la surface périphérique longitudinale qui forment un contour fermé entourant la première surface longitudinale.

La butée présente ainsi une forme cylindrique évidée à l'intérieur et avec des canaux de circulation d'air entre l'intérieur et l'extérieur. Le canal de vide formé par la première surface longitudinale est alors entouré par la butée, et ne nécessite donc plus d'étape d'assemblage particulière pour être formé.

Préférentiellement, en section, la surface périphérique longitudinale présente deux marches de manière à former deux surfaces d'appui longitudinales sensiblement parallèles à la deuxième surface longitudinale et situées de part et d'autre de la deuxième surface longitudinale.

Les deux marches permettent de délimiter une portion de fixation pour les feuilles de la poche, sur la butée. On facilite ainsi la fabrication de la poche, en améliorant le positionnement des feuilles sur les flancs de la butée.

Préférentiellement, en section, la surface périphérique longitudinale présente une forme profilée dont le bord de fuite est formé par la deuxième surface longitudinale.

Une telle forme de butée profilée permet d'obtenir, au niveau de la deuxième surface longitudinale, une largeur sensiblement égale à celle du verre à feuilleter. Par ailleurs, on évite également, lors de la fabrication de la poche, que les feuilles parallèles de la poche ne viennent se coller l'une à l'autre ou bien avec la deuxième surface longitudinale, grâce à la rupture de ligne provoquée entre la deuxième surface longitudinale et la surface périphérique longitudinale profilée.

Préférentiellement, la longueur des canaux de circulation d'air est supérieure ou égale à la plus grande longueur, en section, du contour fermé de la première surface longitudinale.

Préférentiellement, la longueur des canaux de circulation d'air est supérieure à la distance minimale, en section, entre la surface périphérique longitudinale et la première surface longitudinale, et encore plus préférentiellement deux fois, voire trois fois, plus longue que la distance minimale, en section, entre la surface périphérique longitudinale et la première surface longitudinale.

Selon un autre mode de réalisation, la première surface longitudinale présente, en section, un contour ouvert, par exemple un demi-ovale ou un demi-cercle, délimitant en partie le moyen de dépressurisation ou en contact en partie avec le moyen de dépressurisation.

Dans ce mode de réalisation, la butée est destinée à venir en appui sur le moyen de dépressurisation, par exemple sur un ressort à spires non-jointives. La butée permet alors d'isoler le ressort de l'intérieur de la poche, tout en ménageant des canaux de circulation d'air entre les deux. L'assemblage de ces différents éléments est notamment facilité par l'utilisation de la butée à l'état finie, lors de la fabrication de la poche. Préférentiellement, la butée comprend également :
- une première surface périphérique longitudinale s'étendant d'une première extrémité longitudinale de la deuxième surface longitudinale à une première extrémité longitudinale de la première surface longitudinale, et
- une deuxième surface périphérique longitudinale s'étendant d'une deuxième extrémité longitudinale de la deuxième surface longitudinale à une deuxième extrémité longitudinale de la première surface longitudinale, de manière à obtenir, en section, la deuxième surface longitudinale, la première surface longitudinale et les deux surface périphériques longitudinales qui forment un contour fermé.

Préférentiellement, en section, chaque surface périphérique longitudinale présente une marche de manière à former deux surfaces d'appui longitudinales sensiblement parallèles à la deuxième surface longitudinale et situées de part et d'autre de la deuxième surface longitudinale.

Préférentiellement, en section, la première surface longitudinale présente une largeur plus importante que celle de la deuxième surface longitudinale, et les surfaces périphériques longitudinales forment, en section, un rétrécissement allant de la première surface longitudinale à la deuxième surface longitudinale. Autrement dit, la section de la butée présente une forme sensiblement triangulaire dans laquelle le sommet supérieur du triangle est chanfreiné pour former la deuxième surface longitudinale.

La butée comporte, voire est constituée de, un matériau élastomérique, notamment obtenu par vulcanisation, par exemple du caoutchouc. Ainsi, grâce à une butée en matériau élastomérique, l'assemblage de celle-ci avec les autres éléments de la poche, notamment les feuilles, peut être effectué simplement par une étape de réticulation.

Selon un autre aspect, il est également proposé un procédé de fabrication d'une butée telle que décrite précédemment, dans lequel on extrude la butée et on perce les canaux de circulation d'air. La butée présentant une forme générale cylindrique à l'exception des canaux de circulation d'air, elle peut être obtenue directement par extrusion. Il suffit ensuite de percer les différents canaux de circulation d'air pour obtenir la butée finie.

Selon un autre aspect, il est également proposé une poche à parois souples, comportant une butée telle que décrite précédemment.

Préférentiellement, la poche à parois souples comporte également deux feuilles superposées et assemblées de manière étanche selon leurs côtés respectifs regroupés par paires, une paire de côtés étant fixée, par exemple par vulcanisation, sur la ou les surfaces périphériques longitudinales de la butée.

Préférentiellement, la paire de côtés est fixée à la ou les surfaces périphériques longitudinales, contre les deux surfaces d'appui longitudinales.

Selon un autre aspect, il est également proposé un procédé de fabrication d'une poche telle que décrite précédemment, dans lequel on assemble les feuilles, par exemple par vulcanisation, sur la ou les surfaces périphériques longitudinales de la butée.

### Brève description des dessins

L'invention et ses avantages seront mieux compris à la lecture de la description détaillée de plusieurs modes de réalisation particuliers, pris à titre d'exemples nullement limitatifs et illustrés par les dessins annexés sur lesquels :
- la figure **1** est une vue schématique en perspective d'un premier mode de réalisation d'une butée selon l'invention,
- la figure **2** est une vue en coupe de la butée de la figure **1**,
- la figure **3** est une vue en coupe d'une butée selon un deuxième mode de réalisation,
- la figure **4** est une vue en coupe d'une butée selon un troisième mode de réalisation,
- la figure **5** est une vue en coupe d'une butée selon un quatrième mode de réalisation,
- la figure **6** est une vue en coupe d'un premier mode de réalisation de la poche selon l'invention, comportant la butée de la figure **1**, et
- la figure **7** est une vue en coupe d'un deuxième mode de réalisation de la poche selon l'invention, comportant la butée de la figure **5**.

### Description détaillée de l'invention

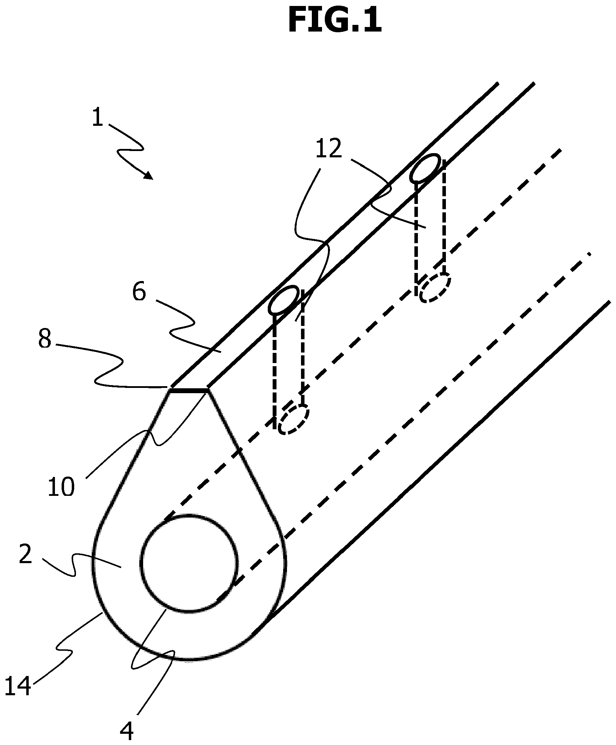

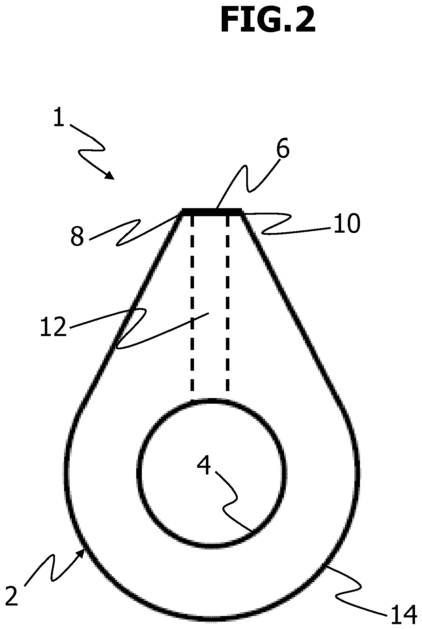

Les figures **1** et **2** illustrent un premier mode de réalisation d'une butée pour une poche de traitement pour le feuilletage du verre, selon la présente invention.

La butée 1 présente une forme générale longitudinale, par exemple cylindrique, dans laquelle la section 2, ou base, de la butée (représentée à la figure 2) présente une forme générale sensiblement identique tout le long de la butée.

La butée comprend une première surface longitudinale 4, et une deuxième surface longitudinale 6 distante de la première surface longitudinale 4. La deuxième surface longitudinale 6 est de préférence non-métallique, de manière à ne pas abimer le verre placé dans la poche, en contact avec elle.

Telle qu'illustrée sur les figures 1 et 2, la première surface longitudinale 4 présente, en section, un contour fermé, par exemple un ovale ou un cercle. La première surface longitudinale 4 définit donc une forme cylindrique qui permettra la circulation d'air une fois montée dans une poche à parois souples. En particulier, la première surface longitudinale 4 délimite un canal de vide utilisé comme moyen de dépressurisation, ou faisant partie du moyen de dépressurisation, d'une poche à parois souples.

La deuxième surface longitudinale 6 se situe à une extrémité supérieure de la section de la butée 1. La deuxième surface longitudinale 6 est destinée à recevoir le chant d'une pièce introduite dans une poche à parois souples. La pièce vient alors reposer sur la deuxième surface longitudinale 6 pendant le traitement thermique et la dépressurisation.

La deuxième surface longitudinale 6 est donc de préférence plane, ou incurvée, et présente, en section, une largeur, c'est-à-dire la distance entre une première extrémité longitudinale 8 et une deuxième extrémité longitudinale 10 de la deuxième surface longitudinale 6, sensiblement égale à la largeur de la pièce qui sera traitée dans la poche à parois souples.

La deuxième surface longitudinale 6 est distante de la première surface longitudinale 4, c'est-à-dire que les deux surface longitudinale 4, 6 ne sont pas adjacentes, mais sont séparées l'une de l'autre, par exemple par une portion du corps de la butée 1.

La butée 1 comporte également des canaux de circulation d'air 12 disposés entre la première surface longitudinale 4 et la deuxième surface longitudinale 6. Les canaux de circulation d'air 12 sont orientés sensiblement perpendiculairement à la direction longitudinale de la butée 1, et débouchent sur la première et la deuxième surface longitudinale 4, 6 afin de permettre une circulation d'air entre les deux surfaces. Tels que représentés sur la figure 1, les canaux de circulation d'air 14 sont cylindriques. Toutefois, ils peuvent présenter une forme différente, par exemple en tronc de cône ou avec un chanfrein du côté de la deuxième surface longitudinale 6 (en utilisant par exemple un forêt étagé pour percer le canal de circulation d'air 12). Dans le deuxième cas, le chanfrein peut même être choisi de diamètre supérieur à la largeur de la deuxième surface 6 : les canaux de circulation d'air peuvent alors déboucher, du côté de la deuxième surface 6, également sur la surface périphérique longitudinale 14.

Par ailleurs, lorsque la poche est destinée à traiter des parebrises présentant un chant inférieur bombé, c'est-à-dire convexe, alors les canaux de circulation 14 de la butée 1 peuvent être disposés à distance, par exemple de 100 à 200mm, du milieu longitudinal de la poche, c'est-à-dire à distance de l'endroit où l'extrémité du chant inférieur bombé va directement reposer sur la deuxième surface longitudinale 6. On évite ainsi une dépression trop importante à cet endroit lors du traitement du pare-brise.

La butée comprend aussi une surface périphérique longitudinale 14, reliant la première extrémité longitudinale 8 et la deuxième extrémité longitudinale 10 de la deuxième surface longitudinale 6 entre elles. La surface périphérique longitudinale 14 et la deuxième surface longitudinale 6 forment ainsi, en section, un contour fermé entourant la première surface longitudinale 4. La surface périphérique 14 forme notamment une surface de fixation de la butée 1 au reste d'une poche à parois souples, comme cela est décrit plus bas.

Comme on peut le constater sur les figures 1 et 2, la section 2 de la butée 1 présente un contour extérieur profilé, par exemple en forme de goutte dont le bord de fuite est chanfreiné pour former la deuxième surface longitudinale 6. La section 2 peut notamment comporter un plan de symétrie, vertical sur la figure 2, passant par le milieu de la deuxième surface longitudinale 6 et par l'axe du cylindre formé par la première surface longitudinale 4.

On constate notamment qu'au niveau du bord de fuite de la section 2, en raison de la deuxième surface longitudinale 6, il y a une rupture de la forme profilée, entre la surface périphérique longitudinale 14 et la deuxième surface longitudinale 6. Une telle rupture de la forme permet d'une part, lors de la fabrication de la poche à parois souples, d'éviter que les canaux de circulation d'air 12 ne puissent être colmatés, et d'autre part, de permettre un traitement efficace de la pièce introduite dans la poche, même à proximité immédiate de la butée 1.

La forme de la section 2 de la butée 1 permet d'une part d'obtenir un canal de vide, formé par la première surface longitudinale 4, suffisamment large pour évacuer l'air contenu dans la poche de manière efficace et rapide, et d'autre part d'avoir une surface d'appui dont la largeur correspond sensiblement à celle des pièces destinées à être traitées par la poche.

A titre d'exemple, la deuxième surface longitudinale 6 peut ainsi présenter, en section, une largeur comprise entre 3 et 5mm. La première surface longitudinale 4 peut présenter, en section, un contour circulaire de diamètre compris entre 9 et 11mm. La longueur des canaux de circulation d'air 12 peut être comprise entre 12 et 14mm. La largeur, en section, de la butée prise perpendiculairement à l'axe des canaux de circulation d'air 12 peut être comprise entre 19 et 21mm.

La butée 1 est fabriquée en matériau élastomérique, par exemple en caoutchouc, afin de faciliter son assemblage au reste de la poche à parois souples qui est formée principalement d'éléments en matériau élastomérique. Par ailleurs, en raison de sa forme générale longitudinale, la butée 1 peut notamment être fabriquée par extrusion avec une filière présentant une forme correspondant à la section de la butée 1, puis par perçage des canaux de circulation d'air 12. On obtient alors une butée 1 facile à fabriquer, dont les dimensions, notamment la longueur, peuvent facilement être adaptées à la dimension de la poche à parois souples, et qui peut être assemblée de manière simple et efficace au reste de la poche, par exemple par réticulation.

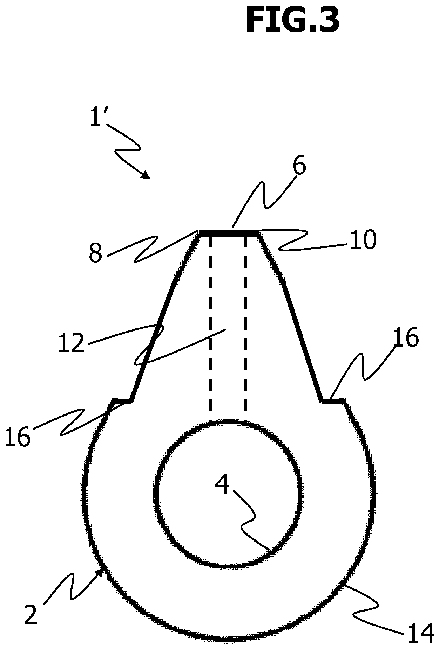

La figure 3 représente un deuxième mode de réalisation d'une butée 1' dans laquelle les éléments identiques à ceux du premier mode de réalisation sont référencés avec les mêmes numéros.

Dans ce deuxième mode de réalisation, la butée 1' comprend une surface périphérique longitudinale 14 qui présente deux marches de manière à former deux surfaces d'appui 16. Les deux surfaces d'appui 16 sont sensiblement parallèles à la deuxième surface longitudinale 6. Par ailleurs, les deux surfaces d'appui 16 sont positionnées de part et d'autre de la deuxième surface longitudinale 6, de sorte que la section 2 de la butée 1' reste toujours sensiblement symétrique par rapport à un plan vertical.

Les deux surfaces d'appui 16 peuvent être utilisées pour positionner correctement les feuilles formant les parois de la poche à parois souples sur la butée 1'. Les surfaces d'appui 16 peuvent par exemple être prévues avec une largeur sensiblement égale à l'épaisseur d'une feuille formant paroi de la poche. On facilite ainsi la fabrication d'une poche avec une butée selon l'invention.

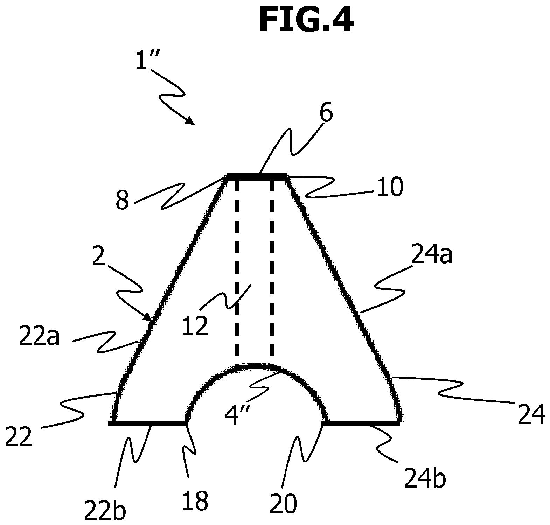

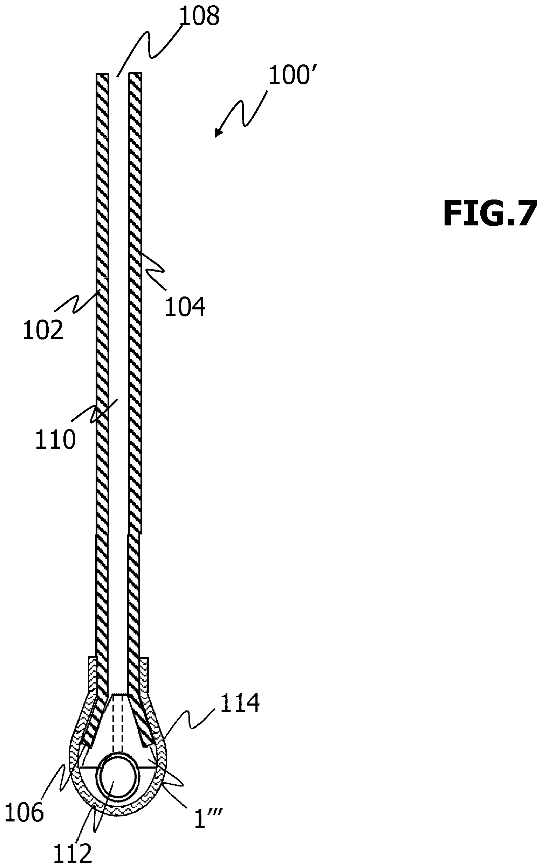

La figure 4 illustre un troisième mode de réalisation d'une butée 1". Dans ce troisième mode de réalisation, la première surface longitudinale 4" de la butée 1" présente, en section, un contour ouvert, par exemple un demi-ovale ou un demi-cercle, présentant une première extrémité 18 et une deuxième extrémité 20. La première surface longitudinale 4" ne permet donc plus de délimiter complètement un canal de vide, mais peut le délimiter en partie ou bien être en contact avec une partie du moyen de dépressurisation. Par exemple, la première surface longitudinale 4" peut accueillir une portion d'un ressort à spires non-jointes (voir figure 7) formant le moyen de dépressurisation.

En particulier, la première surface longitudinale 4" reste en relation avec le moyen de dépressurisation puisque l'air circulant dans les canaux 12 doit être acheminé depuis la deuxième surface longitudinale 6 vers le moyen de dépressurisation, c'est-à-dire via la première surface longitudinale 4".

Telle que représentée à la figure 4, la butée 1" comprend : une première surface périphérique longitudinale 22 s'étendant depuis la première extrémité 8 de la deuxième surface longitudinale 6 vers la première extrémité 18 de la première surface longitudinale 4", et une deuxième surface périphérique longitudinale 24 s'étendant depuis la deuxième extrémité 10 de la deuxième surface longitudinale 6 vers la deuxième extrémité 20 de la première surface longitudinale 4".

En particulier, chaque surface périphérique longitudinale 22, 24 peut présenter d'une part une portion latérale 22a, 24a, s'étendant depuis une extrémité de la deuxième surface longitudinale 6, et d'autre part une portion de jonction 22b, 24b, s'étendant entre la portion latérale 22a, 24a, et une extrémité de la première surface longitudinale 4". Les portions latérales et de jonction des surfaces périphériques longitudinales peuvent présenter notamment un angle entre elles.

Alternativement, les surfaces périphériques longitudinales peuvent être constituées uniquement d'une portion latérale.

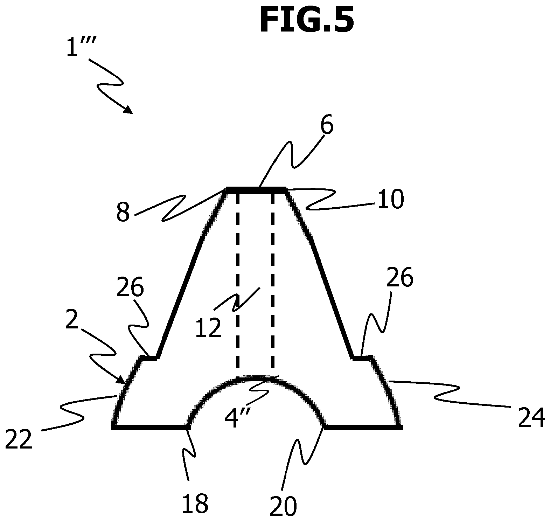

La figure 5 représente un quatrième mode de réalisation d'une butée 1'" dans laquelle les éléments identiques à ceux du premier et deuxième modes de réalisation sont référencés avec les mêmes numéros.

Dans ce quatrième mode de réalisation, la butée 1'" comprend des surfaces périphériques longitudinales 22, 24 qui présentent chacune une marche, de manière à former deux surfaces d'appui 26. Les deux surfaces d'appui 26 sont sensiblement parallèles à la deuxième surface longitudinale 6. Par ailleurs, les deux surfaces d'appui 26 sont positionnées de part et d'autre de la deuxième surface longitudinale 6, de sorte que la section 2 de la butée 1'" reste toujours sensiblement symétrique par rapport à un plan vertical.

Les deux surfaces d'appui 26 peuvent être utilisées pour positionner correctement les feuilles formant les parois de la poche à parois souples sur la butée 1"'. Les surfaces d'appui 26 peuvent par exemple être prévues avec une largeur sensiblement égale à l'épaisseur d'une feuille formant paroi de la poche. On facilite ainsi la fabrication d'une poche avec une butée selon l'invention.

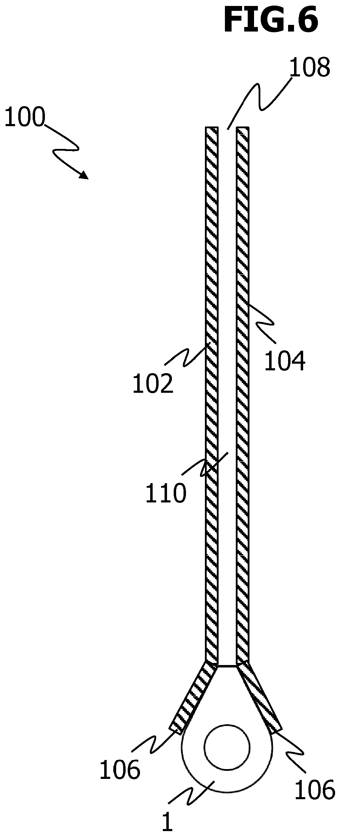

La figure 6 illustre une poche 100 à parois souples comprenant une butée 1 telle que représentée à la figure 2.

La poche 1 comprend deux feuilles souples 102, 104 sensiblement rectangulaires, qui sont superposées et assemblées entre elles selon leurs côtés respectifs. Ainsi, les deux feuilles 102, 104 comprennent un côté longitudinal inférieur 106 fixé sur la surface périphérique longitudinale de la butée 1, ainsi que des côtés latéraux solidarisés entre eux par paire. Enfin, les deux feuilles 102, 104 comprennent également un côté longitudinal supérieur correspondant à une zone d'ouverture 108 de la poche 100.

Hormis la zone d'ouverture 108, les côtés des deux feuilles 102, 104 sont liés entre eux de manière étanche, afin de permettre la dépressurisation de la poche lors du feuilletage du verre. La zone d'ouverture 108 permet d'accéder à un volume intérieur 110 de la poche 100, dans lequel est placé le verre destiné à être feuilleté. La zone d'ouverture 108 doit notamment être étanche à l'état fermé afin de permettre la dépressurisation de la poche avant l'étape de chauffe.

Chaque feuille 102, 104 peut être formée par une ou plusieurs couches de textile enduit d'un matériau élastomérique. Un tel matériau permet d'obtenir une poche souple qui est étanche et résistante aux hautes températures. Par ailleurs, la butée étant elle-même en matériau élastomérique, l'assemblage de celle-ci avec les feuilles 102 et 104 est rendu aisé et robuste dans le temps.

La poche 100 peut également comprendre un embout distal (non représenté) monté dans l'axe de la butée 1 pour venir en prise à l'intérieur d'une extrémité de la première surface longitudinale. L'embout distal est destiné à être raccordé à une source de vide et permet de collecter l'air contenu dans la poche.

Pour fabriquer une telle poche, il suffit de venir fixer les côtés inférieurs 106 des feuilles sur la surface périphérique longitudinale de la butée, pour intégrer à la fois un moyen de dépressurisation et un moyen de butée dans la poche.

Alternativement, il est possible de former les deux feuilles de la poche en pliant en deux une grande feuille. Dans ce cas, la butée peut être fixée au niveau de la pliure de la grande feuille, la pliure venant entourer et se fixer tout le long de la surface périphérique longitudinale de la butée.

La figure 7 représente un deuxième mode de réalisation d'une poche 100' comportant une butée 1'" telle que décrite sur la figure 5. La poche 100' comporte deux feuilles 102, 104 qui sont fixées sur les surfaces périphériques longitudinales 22, 24 de la butée 1'", et plus particulièrement en butée contre les surfaces d'appui 26.

Par ailleurs, afin de former le moyen de dépressurisation, un ressort 112 est positionné contre la première surface longitudinale 4", et une feuille de couverture 114 est disposée autour du ressort 112, de la butée 1'" et des extrémités inférieures longitudinales 106 des feuilles 102 et 104, afin de rendre étanche le côté inférieur de la poche 100'.

Comme illustré sur les figures 1 à 5, les butées selon la présente invention existent de manière isolées, et sont fabriquées de manière individuelle avant d'être intégrées à une poche à parois souples.

Ainsi, grâce à la butée selon l'invention, il devient plus facile et moins cher de fabriquer des poches à parois souples fiables. En particulier, la butée selon l'invention permet de réduire le nombre d'éléments nécessaire à l'assemblage d'une poche, et de faciliter la fixation des différents éléments entre eux.

## Revendications

1. Butée (1, 1', 1", 1"') destinée à être assemblée à une poche à parois souples (100, 100'), la poche étant configurée pour être dépressurisée grâce à un moyen de dépressurisation longitudinal en communication fluidique avec un volume intérieur (110) de la poche, la butée étant destinée à former un appui pour le chant d'une pièce introduite dans le volume intérieur de la poche, **caractérisée en ce que** la butée présente une forme longitudinale et comprenant au moins :
- une première surface longitudinale (4, 4") destinée à délimiter ou à être en contact avec au moins une partie du moyen de dépressurisation,
- une deuxième surface longitudinale (6), par exemple plane, distante de la première surface longitudinale et étant destinée à former une surface d'appui pour le chant de la pièce introduite dans la poche, et
- des canaux de circulation d'air (12) entre la première surface longitudinale et la deuxième surface longitudinale dans laquelle la butée comporte, voire est constituée, d'un matériau élastomérique.

2. Butée (1, 1') selon la revendication 1, dans laquelle la première surface longitudinale (4) présente, en section, un contour fermé, par exemple un ovale ou un cercle, délimitant le moyen de dépressurisation ou en contact avec le moyen de dépressurisation.

3. Butée (1, 1') selon la revendication précédente, comprenant également une surface périphérique longitudinale (14) s'étendant d'une première extrémité longitudinale (8) de la deuxième surface longitudinale (6) à une deuxième extrémité longitudinale (10) de la deuxième surface longitudinale de manière à obtenir, en section, la deuxième surface longitudinale (6) et la surface périphérique longitudinale (14) qui forment un contour fermé entourant la première surface longitudinale (4).

4. Butée (1') selon la revendication 3, dans laquelle, en section, la surface périphérique longitudinale (14) présente deux marches de manière à former deux surfaces d'appui longitudinales (16) sensiblement parallèles à la deuxième surface longitudinale (6) et situées de part et d'autre de la deuxième surface longitudinale (6).

5. Butée (1, 1') selon la revendication 3 ou 4, dans laquelle, en section, la surface périphérique longitudinale (14) présente une forme profilée dont le bord de fuite est formé par la deuxième surface longitudinale (6).

6. Butée (1", 1'") selon la revendication 1, dans laquelle la première surface longitudinale (4") présente, en section, un contour ouvert, par exemple un demi-ovale ou un demi-cercle, délimitant en partie le moyen de dépressurisation ou en contact en partie avec le moyen de dépressurisation.

7. Butée (1", 1'") selon la revendication précédente, comprenant également :
- une première surface périphérique longitudinale (22) s'étendant d'une première extrémité longitudinale (8) de la deuxième surface longitudinale (6) à une première extrémité longitudinale (18) de la première surface longitudinale (4'), et
- une deuxième surface périphérique longitudinale (24) s'étendant d'une deuxième extrémité longitudinale (10) de la deuxième surface longitudinale (6) à une deuxième extrémité longitudinale (20) de la première surface longitudinale (4"),
de manière à obtenir, en section, la deuxième surface longitudinale (6), la première surface longitudinale (4") et les deux surface périphériques longitudinales (22, 24) qui forment un contour fermé.

8. Butée (1'") selon la revendication précédente, dans laquelle, en section, chaque surface périphérique longitudinale (22, 24) présente une marche de manière à former deux surfaces d'appui (26) longitudinales sensiblement parallèles à la deuxième surface longitudinale (6) et situées de part et d'autre de la deuxième surface longitudinale (6).

9. Butée (1", 1'") selon la revendication 7 ou 8, dans laquelle, en section, la première surface longitudinale (4") présente une largeur plus importante que celle de la deuxième surface longitudinale (6), et dans laquelle les surfaces périphériques longitudinales (22, 24) forment, en section, un rétrécissement allant de la première surface longitudinale à la deuxième surface longitudinale.

10. Butée (1, 1', 1", 1'") selon l'une quelconque des revendications précédentes, comportant, voire constituée, d'un matériau élastomérique obtenu par vulcanisation, par exemple du caoutchouc.

11. Procédé de fabrication d'une butée (1, 1', 1", 1'") selon l'une quelconque des revendications précédentes, dans lequel on extrude la butée et on perce les canaux de circulation d'air (12).

12. Poche à parois souples (100, 100'), comportant une butée (1, 1', 1", 1'") selon l'une quelconque des revendications 1 à 10.

13. Poche (100, 100') selon la revendication précédente, dans laquelle la poche comporte également deux feuilles (102, 104) superposées et assemblées de manière étanche selon leurs côtés respectifs regroupés par paires, une paire de côtés (106) étant fixée, par exemple par vulcanisation, sur la ou les surfaces périphériques longitudinales de la butée (1, 1', 1", 1'").

14. Poche (100, 100') selon la revendication précédente, comportant une butée (1', 1"') selon la revendication 4 ou 8, dans laquelle la paire de côtés (106) est fixée à la ou les surfaces périphériques longitudinales, contre les deux surfaces d'appui longitudinales (16, 26).

15. Procédé de fabrication d'une poche (100, 100') selon l'une quelconque des revendications 13 à 14, dans lequel on assemble les feuilles, par exemple par vulcanisation, sur la ou les surfaces périphériques longitudinales de la butée (1, 1', 1", 1'").

## Patentansprüche

1. Anschlag (1, 1', 1", 1'"), welcher dazu bestimmt ist, an einer Tasche mit flexiblen Wänden (100, 100') angebracht zu werden, wobei die Tasche dazu ausgelegt ist, mittels eines Längsdruckentlastungsmittels, das mit einem Innenvolumen (110) der Tasche in Fluidverbindung steht, druckentlastet zu werden, wobei der Anschlag dazu bestimmt ist, eine Anlage für die Kante eines in das Innenvolumen der Tasche eingeführten Teils zu bilden, **dadurch gekennzeichnet, dass** der Anschlag eine Längsform aufweist und wenigstens umfasst:
- eine erste Längsfläche (4, 4"), die dazu bestimmt ist, wenigstens einen Teil des Druckentlastungsmittels zu begrenzen oder mit diesem in Kontakt zu stehen,
- eine zweite, beispielsweise ebene, Längsfläche (6), die von der ersten Längsfläche beabstandet ist und die dazu bestimmt ist, eine Auflagefläche für die Kante des in die Tasche eingeführten Teils zu bilden, und
- Luftzirkulationskanäle (12) zwischen der ersten Längsfläche und der zweiten Längsfläche
wobei der Anschlag ein elastomeres Material umfasst, ja sogar daraus besteht.

2. Anschlag (1, 1') nach Anspruch 1, bei dem die erste Längsfläche (4) im Schnitt eine geschlossene Kontur, zum Beispiel ein Oval oder einen Kreis, aufweist, die das Druckentlastungsmittel begrenzt oder mit dem Druckentlastungsmittel in Kontakt steht.

3. Anschlag (1, 1') nach dem vorhergehenden Anspruch, ebenfalls umfassend eine Längsumfangsfläche (14), die sich von einem ersten Längsende (8) der zweiten Längsfläche (6) zu einem zweiten Längsende (10) der zweiten Längsfläche erstreckt, um im Schnitt die zweite Längsfläche (6) und die Längsumfangsfläche (14) zu erhalten, die eine geschlossene Kontur bilden, welche die erste Längsfläche (4) umgibt.

4. Anschlag (1') nach Anspruch 3, bei dem die Längsumfangsfläche (14) im Schnitt zwei Stufen aufweist, um zwei Längsauflageflächen (16) zu bilden, die im Wesentlichen parallel zu der zweiten Längsfläche (6) verlaufen und sich auf beiden Seiten der zweiten Längsfläche (6) befinden.

5. Anschlag (1, 1') nach Anspruch 3 oder 4, bei dem die Längsumfangsfläche (14) im Schnitt eine profilierte Form aufweist, deren Hinterkante durch die zweite Längsfläche (6) gebildet ist.

6. Anschlag (1", 1"') nach Anspruch 1, bei dem die erste Längsfläche (4'") im Schnitt eine offene Kontur, beispielsweise ein Halboval oder einen Halbkreis aufweist, die das Druckentlastungsmittel teilweise begrenzt oder mit dem Druckentlastungsmittel teilweise in Kontakt steht.

7. Anschlag (1", 1"') nach dem vorhergehenden Anspruch, ebenfalls umfassend:
- eine erste Längsumfangsfläche (22), die sich von einem ersten Längsende (8) der zweiten Längsfläche (6) zu einem ersten Längsende (18) der ersten Längsfläche (4') erstreckt, und
- eine zweite Längsumfangsfläche (24), die sich von einem zweiten Längsende (10) der zweiten Längsfläche (6) zu einem zweiten Längsende (20) der ersten Längsfläche (4") erstreckt,
um im Schnitt die zweite Längsfläche (6), die erste Längsfläche (4") und die beiden Längsumfangsflächen (22, 24) zu erhalten, die eine geschlossene Kontur bilden.

8. Anschlag (1'") nach dem vorhergehenden Anspruch, bei dem jede Längsumfangsfläche (22, 24) im Schnitt eine Stufe aufweist, um zwei Längsauflageflächen (26) zu bilden, die im Wesentlichen parallel zu der zweiten Längsfläche (6) verlaufen und sich auf beiden Seiten der zweiten Längsfläche (6) befinden.

9. Anschlag (1", 1"') nach Anspruch 7 oder 8, bei dem die erste Längsfläche (4") im Schnitt eine größere Breite als die zweite Längsfläche (6) aufweist, und bei dem die Längsumfangsflächen (22, 24) im Schnitt eine von der ersten Längsfläche zu der zweiten Längsfläche verlaufende Verjüngung bilden.

10. Anschlag (1, 1', 1", 1"') nach einem der vorhergehenden Ansprüche, der ein durch Vulkanisieren erhaltenes elastomeres Material, beispielsweise Gummi, umfasst, ja sogar daraus besteht.

11. Verfahren zur Herstellung eines Anschlags (1, 1', 1", 1"') nach einem der vorhergehenden Ansprüche, bei dem der Anschlag extrudiert wird und die Luftzirkulationskanäle (12) gebohrt werden.

12. Tasche mit flexiblen Wänden (100, 100'), umfassend einen Anschlag (1, 1', 1", 1'") nach einem der Ansprüche 1 bis 10.

13. Tasche (100, 100') nach dem vorhergehenden Anspruch, wobei die Tasche auch zwei Folien (102, 104) umfasst, die übereinander angeordnet und entlang ihrer jeweiligen paarweise zusammengestellten Seiten dicht zusammengefügt sind, wobei ein Paar von Seiten (106) beispielsweise durch Vulkanisieren an der oder den Längsumfangsfläche(n) des Anschlags (1, 1', 1", 1'") befestigt ist.

14. Tasche (100, 100') nach dem vorhergehenden Anspruch, umfassend einen Anschlag (1', 1'") nach Anspruch 4 oder 8, bei der das Paar von Seiten (106) an der oder den Längsumfangsfläche(n), gegen die beiden Längsauflageflächen (16, 26) befestigt wird.

15. Verfahren zur Herstellung einer Tasche (100, 100') nach einem der Ansprüche 13 bis 14, bei dem die Folien, beispielsweise durch Vulkanisieren, an der oder den Längsumfangsfläche(n) des Anschlags (1, 1', 1", 1'") zusammengefügt werden.

## Claims

1. An abutment (1, 1', 1", 1"') for being assembled in a bag having flexible walls (100, 100'), the bag being configured to be subjected to suction by longitudinal suction means in fluid flow communication with an inside volume (110) of the bag, the abutment being for forming a rest for the edge face of a part inserted into the inside volume of the bag, the abutment being **characterized in that** it presents an elongate shape and comprises at least:
- a first longitudinal surface (4, 4") for defining or being in contact with at least a portion of the suction means;
- a second longitudinal surface (6), e.g. a plane surface, that is spaced apart from the first longitudinal surface and that is to form a rest surface for the edge face of the part inserted in the bag; and
- air flow channels (12) between the first longitudinal surface and the second longitudinal surface
wherein the abutment comprises or is constituted by an elastomer material.

2. An abutment (1, 1') according to claim 1, wherein the first longitudinal surface (4) presents, in section, an outline that is closed, e.g. oval or circular, defining the suction means or in contact with the suction means.

3. An abutment (1, 1') according to the preceding claim, also comprising a longitudinal peripheral surface (14) extending from a first longitudinal end (8) of the second longitudinal surface (6) to a second longitudinal end (10) of the second longitudinal surface so as to obtain, in section, the second longitudinal surface (6) and the longitudinal peripheral surface (14) forming a closed outline surrounding the first longitudinal surface (4).

4. An abutment (1') according to claim 3, wherein, in section, the longitudinal peripheral surface (14) presents two steps so as to form two longitudinal positioning surfaces (16) that are substantially parallel to the second longitudinal surface (6) and that are situated on either side of the second longitudinal surface (6).

5. An abutment (1, 1') according to claim 3 or claim 4, wherein, in section, the longitudinal peripheral surface (14) presents a tapering shape with a trailing edge that is formed by the second longitudinal surface (6).

6. An abutment (1", 1"') according to claim 1, wherein the first longitudinal surface (4") presents, in section, an outline that is open, e.g. half an oval or a semicircle, defining a portion of the suction means or in contact with the suction means.

7. An abutment (1", 1"') according to the preceding claim, also comprising:
- a first longitudinal peripheral surface (22) extending from a first longitudinal end (8) of the second longitudinal surface (6) to a first longitudinal end (18) of the first longitudinal surface (4'); and
- a second longitudinal peripheral surface (24) extending from a second longitudinal end (10) of the second longitudinal surface (6) to a second longitudinal end (20) of the first longitudinal surface (4');
so as to obtain in section, the second longitudinal surface (6), the first longitudinal surface (4"), and the two longitudinal peripheral surfaces (22, 24) that form a closed outline.

8. An abutment (1'") according to the preceding claim, wherein, in section, each longitudinal peripheral surface (22, 24) presents a step so as to form two longitudinal positioning surfaces (26) that are substantially parallel to the second longitudinal surface (6) and that are situated on either side of the second longitudinal surface (6).

9. An abutment (1", 1"') according to claim 7 or claim 8, wherein, in section, the first longitudinal surface (4") presents width that is greater than the width of the second longitudinal surface (6), and wherein the longitudinal peripheral surfaces (22, 24) form, in section, a narrowing going from the first longitudinal surface to the second longitudinal surface.

10. An abutment (1, 1', 1", 1"') according to any preceding claim, including or constituted by an elastomer material, obtained by vulcanizing, e.g. rubber.

11. A method of fabricating an abutment (1, 1', 1", 1"') according to any preceding claim, wherein the abutment is extruded and the air flow channels (12) are formed.

12. A bag having flexible walls (100, 100') and including an abutment (1, 1', 1", 1"') according to any one of claims 1 to 10.

13. A bag (100, 100') according to the preceding claim, wherein the bag also includes two superposed sheets (102, 104) that are assembled together in leaktight manner along their respective sides grouped together in pairs, one pair of sides (106) being fastened to the longitudinal peripheral surface(s) of the abutment (1, 1', 1", 1"'), e.g. by vulcanizing.

14. A bag (100, 100') according to the preceding claim, including an abutment (1', 1"') according to claim 4 or claim 8, wherein the pair of sides (106) is fastened to the longitudinal peripheral surface(s) against two longitudinal positioning surfaces (16, 26).

15. A method of fabricating a bag (100, 100') according to claim 13 or claim 14, wherein the sheets are assembled to the longitudinal peripheral surface(s) of the abutment (1, 1', 1", 1"'), e.g. by vulcanizing.
